# EUROPÄISCHE PATENTSCHRIFT

(11) **EP 3 022 099 B1**
(45) Veröffentlichungstag und Bekanntmachung des Hinweises auf die Patenterteilung: **24.04.2019**
(21) Anmeldenummer: 14738797.1
(22) Anmeldetag: 08.07.2014
(51) Int. Cl.: B60T 8/34, B60T 8/24, B60T 13/68, B60T 15/18, B60T 15/20, B60T 15/22

(54) **FESTSTELLBREMSEINRICHTUNG FÜR EIN ZUGFAHRZEUG EINER ZUGFAHRZEUG-ANHÄNGERKOMBINATION MIT NACHRÜSTBARER STRECKBREMSVENTILEINRICHTUNG**
PARKING BRAKE DEVICE FOR A TOWING VEHICLE OF A TOWING VEHICLE/TRAILER COMBINATION HAVING AN ANTI-JACKKNIFE BRAKE VALVE DEVICE THAT CAN BE RETROFITTED
DISPOSITIF DE FREINAGE DE STATIONNEMENT POUR UN VÉHICULE TRACTEUR D'UNE COMBINAISON DE VÉHICULE TRACTEUR-REMORQUE PRÉSENTANT UN DISPOSITIF DE SOUPAPE POUR FREIN DE MAINTIEN EN LIGNE POUVANT ÊTRE RATTRAPÉ

(30) Priorität: 16.07.2013 DE 102013107503
(43) Veröffentlichungstag der Anmeldung: 25.05.2016
(73) Patentinhaber: KNORR-BREMSE Systeme für Nutzfahrzeuge GmbH, 80809 München (DE)
(72) Erfinder: HERGES, Michael, 80935 München (DE)
(86) Internationale Anmeldenummer: PCT/EP2014/064500
(87) Internationale Veröffentlichungsnummer: WO 2015/007561

(56) Entgegenhaltungen:
- EP-A2- 1 719 677
- EP-A2- 1 923 284
- EP-A2- 1 923 286
- EP-A2- 2 570 318
- WO-A2-2009/098003
- DE-A1-102006 036 748
- DE-A1-102007 008 504
- DE-A1-102007 014 423
- DE-A1-102007 023 345
- DE-A1-102008 014 459
- DE-A1-102008 047 632
- DE-A1-102008 048 207

## Beschreibung

Die Erfindung betrifft eine elektro-pneumatische Feststellbremseinrichtung für ein Zugfahrzeug einer Zugfahrzeug-Anhängerkombination, gemäß dem Oberbegriff von Anspruch 1, sowie ein Zugfahrzeug, welches eine elektro-pneumatische Feststellbremseinrichtung beinhaltet, gemäß Anspruch 12.

Pneumatische Bremssysteme von Nutzfahrzeugen bzw. Zugfahrzeugen besitzen in der Regel eine rein pneumatische Feststellbremseinrichtung, bei welcher zum Feststellbremsen Federspeicherbremszylinder entlüftet werden. Die Federspeicherbremszylinder können durch Entlastung von Druckluft ganz oder teilweise gelöst werden. Die Betätigung der Feststellbremse erfolgt dabei in der Regel durch einen vom Fahrer manuell bedienbares Feststellbremsventil. In der Stellung, in der die Feststellbremse vollständig zugespannt ist, der Druck in den Federspeicherbremszylindern also sehr niedrig ist, kann der Bedienhebel des Feststellbremsventils in seiner Feststellbremsstellung einrasten, so dass die Federspeicherbremszylinder vollständig entlüftet bleiben. Dieses Feststellbremsbremsventil besitzt bei Zugfahrzeugen für den Anhängerbetrieb neben einem Ausgangsanschluss zur Steuerung der Federspeicherbremszylinder des Zugfahrzeugs noch einen weiteren Ausganganschluss, der über eine pneumatische Verbindung mit einem pneumatischen Steuereingang eines Anhängersteuerventils verbunden ist, welches den Ausgangsdruck am weiteren Ausgang des Feststellbremsventils invertiert. Das Anhängersteuerventil steuert dann über eine Bremsleitung eine pneumatische Betriebsbremsanlage des Anhängers. Sinkt nun der Druck am Steuereingang des Anhängersteuerventils, so steigt der Druck in der Bremsleitung zum Anhänger und die Betriebsbremsanlage des Anhängers wird zugespannt. In Betätigungsstellungen, in denen der Betätigungshebel des Feststellbremsventils noch nicht in die Feststellbremsstellung eingerastet ist, erhalten der Ausgangsanschluss zu den Federspeicherbremszylindern und der weitere Ausgangsanschluss zum Anhängersteuerventil den gleichen Druck, so dass nicht nur die Federspeicherbremszylinder, sondern auch die Anhängerbremsen gemäß diesem Druck zugespannt werden.

Das Feststellbremsventil ist in der Kabine in Reichweite des Fahrers positioniert. Es besitzt einen ziemlich langen Hebel als Betätigungsorgan, so dass der Betätigungshebel vom Fahrer oft auch als Festhaltegriff benutzt wird und daher entsprechend stabil befestigt werden muss. Weiterhin schränkt der Betätigungshebel die Möglichkeiten der Kabinengestaltung ein. Außerdem müssen pneumatische Leitungen in die Kabine verlegt werden, bei manchen Fahrzeugen bis unter das Armaturenbrett, was potentielle Bruchstellen erzeugt, da die Kabine gegenüber dem Chassis gefedert aufgehängt und kippbar ist, wodurch teure, vorgefertigte Formrohre erforderlich sind. Außerdem sind mit diesem rein manuell gesteuerten Feststellbremsventil keine automatischen Funktionen, wie das automatische Einlegen der Feststellbremse beim Abstellen des Fahrzeugs oder das automatische Lösen beim Losfahren möglich.

Um diese Nachteile zu vermeiden, wurden elektro-pneumatische Feststellbremseinrichtungen entwickelt, deren pneumatische Teile sich außerhalb der Kabine befinden. In der Kabine verbleibt nur noch ein elektrischer Feststellbremssignalgeber zur Erfassung des Fahrerwunsches, dessen Signale auf elektrischem Wege einer Steuerelektronik der Feststellbremseinrichtung übertragen wird. Die Steuerelektronik steuert eine elektropneumatische, beispielsweise am Chassis des Zugfahrzeugs angeordnete Ventileinheit, die als Baueinheit ausgeführt ist und von der ein Ausgangsanschluss an die Federspeicherbremszylinder und ein weiterer Ausgangsanschluss über eine pneumatische Verbindung an einen pneumatischen Steueranschluss eines elektro-pneumatischen Anhängersteuermoduls angeschlossen ist. Die Ventileinheit regelt oder steuert dann den Druck zu den Federspeicherbremszylindern bzw. zum Anhängersteuermodul mittels Aktuatoren wie Magnetventilen und gegebenenfalls weiteren Komponenten wie z.B. Relaisventilen.

Bei einer solchen beispielsweise aus DE 10 2006 041 011 A1, insbesondere dort aus Fig.7 bekannten elektro-pneumatischen Feststellbremseinrichtung sind dann keine pneumatischen Leitungen für die Feststellbremssteuerung in der Kabine mehr nötig. Weiterhin sind über die Fahrfunktion und die Feststellbrems- oder Parkfunktion weitere Funktionen wie Hilfsbremsfunktion und Testfunktion möglich.

Im Rahmen der Hilfsbremsfunktion werden die Federspeicherbremsen als Feststellbremse des Zugfahrzeugs und die Betriebsbremsen des Anhängers gestuft zugespannt bzw. gelöst, um im Notfall einer ausgefallenen elektrischen Betriebsbremse mit gesteuerter Bremskraft bremsen zu können.

Mit Hilfe der Testfunktion, bei welcher die Feststellbremse, d.h. die Federspeicherbremsen des Zugfahrzeugs zugespannt und die Anhängerbremse gelöst sind, kann festgestellt werden, ob das eingebremste Zugfahrzeug den Anhänger beispielsweise an einem Gefälle halten kann.

Im Zusammenhang mit Zugfahrzeug-Anhängerkombinationen ist es weiterhin bekannt, das Fahrverhalten durch eine Streckbremsfunktion zu stabilisieren. Durch die Streckbremsfunktion wird verhindert, dass der Anhänger z.B. auf Gefällestrecken eine höhere Geschwindigkeit als das Zugfahrzeug erreicht, da eine solche Situation letztlich zu einem Einknicken des Zuges ("jack knifing") und somit zu einer sehr unsicheren Fahrsituation führen könnte. Eine solche Streckbremsfunktion wird insbesondere durch das gepulste Ansteuern von Magnetventilen realisiert, die den Bremsdruck der Anhängerbremsanlage beeinflussen. Das gepulste Ansteuern kann beispielsweise frequenzmoduliert und, insbesondere bei konstanter Frequenz, pulsweitenmoduliert erfolgen. Bei den angesteuerten Magnetventilen kann es sich insbesondere um Schaltventile handeln, welche in erster Linie für das Umschalten zwischen einem belüftenden und einem entlüftenden Zustand vorgesehen sind, also im Prinzip keine dosierte Druckversorgung zur Verfügung stellen sollen. Indem nun solche Schaltventile beispielsweise pulsweitenmoduliert angesteuert werden, das heißt mit einem bestimmten Tastverhältnis zwischen dem belüftenden und dem entlüftenden Zustand umgeschaltet werden können, ist eine quasi kontinuierliche Druckdosierung im Bereich der ausgesteuerten Druckluft erzielbar.

Bei einer elektro-pneumatischen Feststellbremseinrichtung wird der Druck zu einem Druck invertierenden pneumatischen Steuereingang des Anhängersteuermoduls oder -ventils auf elektronisch gesteuertem oder geregeltem Wege abgesenkt, um die Anhängerbremsen zuzuspannen. Dabei muss aus Sicherheitsgründen verhindert werden, dass im Falle eines Ausfalls der Elektronik oder der elektrischen Energieversorgung die Federspeicherbremszylinder oder die Anhängerbremsen selbsttätig zuspannen.

Aus der DE 10 2007 052 521 A1 ist eine elektro-pneumatische Feststellbremseinrichtung bekannt, bei welcher ein 3/2-Wege-Magnetventil, mit welchem die Streckbremsfunktion realisiert wird, zusammen mit weiteren Magnetventilen und einem Relaisventil innerhalb einer als Baueinheit ausgeführten Steuereinheit angeordnet, mit welcher auch die Fahrfunktion, die Parkbremsfunktion und die Testfunktion bewerkstelligt werden. Ein Ausgangsanschluss dieser Steuereinheit steht mit einem pneumatischen Steuereingang eines Anhängersteuermoduls in Verbindung, um die Anhängerbremsen vom Zugfahrzeug aus zu steuern.

Gattungsgemäße elektro-pneumatische Feststellbremseinrichtungen sind aus EP 1 923 284 A2, EP 1 923 286 A2 und DE 10 2008 048 207 A1 bekannt.

Da nur eine geringe Anzahl von Nutzfahrzeugen mit einer Streckbremsfunktion ausgestattet ist, liegt der Erfindung die Aufgabe zugrunde, eine gattungsgemäße elektro-pneumatische Feststellbremseinrichtung derart fortzubilden, dass eine Streckbremsfunktion mit geringem Aufwand nachgerüstet werden kann.

Diese Aufgabe wird erfindungsgemäß durch die Merkmale von Anspruch 1 gelöst.

### Offenbarung der Erfindung

Die Erfindung basiert darauf, dass in der pneumatischen Verbindung zwischen dem ersten Ausgangsanschluss der Ventileinheit und dem Steueranschluss des Anhängersteuermoduls oder des Anhängersteuerventils eine separate elektromagnetische Ventileinrichtung angeordnet ist, wobei zur Realisierung einer Streckbremsfunktion zum Einbremsen des Anhängers unabhängig vom Zugfahrzeug auf vom Feststellbremssignalgeber oder von einem weiteren Signalgeber erzeugte, der Streckbremsfunktion entsprechende elektrische Streckbremssignale hin
a) wenigstens ein elektromagnetisches Ventil der Ventileinheit von dem Steuergerät derart angesteuert ist, dass der erste Ausgangsanschluss mit dem Vorratsanschluss verbunden und der zweite Ausgangsanschluss belüftet wird,
b) die elektromagnetische Ventileinrichtung derart ausgebildet und von dem Steuergerät oder von einem weiteren Steuergerät derart angesteuert ist, dass sie an den pneumatischen Steueranschluss des Anhängersteuermoduls oder des Anhängersteuerventils einen abhängig von den Streckbremssignalen dosierten Steuerdruck aussteuert.

Dieser dosierte Steuerdruck schließt den Druckwert einer Drucksenke, insbesondere den Atmosphärendruck ein, um die Anhängerbremsen vollständig zuspannen zu können. Der dosierte Steuerdruck kann dann Druckwerte zwischen dem Atmosphärendruck und einem Höchstdruck einnehmen, der beispielsweise dem Vorratsdruck im Druckluftvorrat entspricht.

Mit anderen Worten ist dann die elektromagnetische Ventileinrichtung, die teilweise gemäß Stand der Technik entweder in der Ventileinheit, in welcher die die Fahrfunktion und die Parkbremsfunktion und gegebenenfalls auch noch die Hilfsbremsfunktion und die Testfunktion ausführenden Magnetventile untergebracht sind, oder im Anhängersteuermodul angeordnet, nun außerhalb der Ventileinheit bzw. des Anhängersteuermoduls angeordnet. "Außerhalb" der Ventileinheit bzw. des Anhängersteuermoduls bedeutet dabei, dass die elektromagnetische Ventileinrichtung nicht in demselben Ventilgehäuse oder Ventilblock der Ventileinheit bzw. des Anhängersteuermoduls angeordnet ist, aber durchaus an dem Ventilgehäuse oder Ventilblock der Ventileinheit bzw. des Anhängersteuermoduls von außen angeblockt oder angeflanscht sein kann. Wesentlich ist, dass die elektromagnetische Ventileinrichtung über ein eigenes Gehäuse bzw. über einen eigenen Ventilblock verfügt, damit sie als separat handelbare Ware in bestehende elektropneumatische Feststellbremseinrichtungen, die bis dahin ohne Streckbremsfunktion auskommen mussten, eingebaut werden kann.

Damit können elektro-pneumatische Feststellbremseinrichtungen, die beispielsweise gemäß DE 10 2006 041 011 A1 (dort Ausführungsform gemäß Fig.7) bislang über keine Streckbremsfunktion verfügten, auf einfache Weise mit einer Streckbremsfunktion versehen werden, indem in die pneumatische Verbindung zwischen dem ersten Ausgangsanschluss der Ventileinheit und dem pneumatischen Steueranschluss des Anhängersteuermoduls bzw. des Anhängersteuerventils die elektromagnetische Ventileinrichtung eingefügt wird. Zusätzlich muss das bereits zum Steuern der elektro-magnetischen Feststellbremseinrichtung bereits vorhandene Steuergerät oder ein separates, nur für die Streckbremsfunktion vorgesehenes Steuergerät bzw. ein anderes Steuergerät mit entsprechenden Steuerroutinen versehen werden, die eine entsprechende elektrische Ansteuerung der elektromagnetischen Ventileinrichtung ermöglichen. Schließlich kann der bereits vorhandene elektrische Feststellbremssignalgeber bereits mit einer Betätigungsmöglichkeit für die Streckbremsfunktion ausgerüstet sein oder es wird ein separater Streckbremssignalgeber vorgesehen.

Mit anderen Worten wird dann die elektromagnetische Ventileinrichtung nachträglich zwischen die Ventileinheit und das Anhängersteuermodul bzw. das Anhängersteuerventil in Reihe geschaltet. Damit ist eine Nachrüstung der Streckbremsfunktion bei elektro-pneumatischen Feststellbremseinrichtungen der gattungsgemäßen Art auf einfache Weise möglich.

Erfindungsgemäß beinhaltet die elektromagnetische Ventileinrichtung wenigstens ein elektromagnetisches Schaltventil und wird durch zwei 2/2-Wege-Magnetventile gebildet, wobei die elektromagnetische Ventileinrichtung durch ein ABS-Drucksteuerventil gebildet wird.

Beinhaltet die elektromagnetische Ventileinrichtung zwei 2/2-Wegeventile, so können direkt gesteuerte 2/2-Magnetventile oder vorgesteuerte 2/2-Wegeventile zum Einsatz kommen. Die elektromagnetische Ventileinrichtung ist ein preisgünstiges ABS-Drucksteuerventil mit von 2/2-Wege-Magnetventilen vorgesteuerten 2/2-Membranventilen. Da sowohl die direkt gesteuerten als auch die vorgesteuerten 2/2-Wegeventile funktional gleich arbeiten, wird im Folgenden für beide Varianten der Begriff "2/2-Wege-Magnetventil" verwendet.

Durch die in den Unteransprüchen aufgeführten Maßnahmen sind vorteilhafte Weiterbildungen und Verbesserungen der in Anspruch 1 angegebenen Erfindung möglich.

Bevorzugt wird das wenigstens eine elektromagnetische Schaltventil der elektromagnetischen Ventileinrichtung gepulst angesteuert. Wird die elektromagnetische Ventileinrichtung durch zwei 2/2-Wege-Magnetventile gebildet, so verbindet ein erstes, stromlos offenes 2/2-Wege-Magnetventile den Anschluss zur Ventileinheit mit dem zum Anhängersteuermodul, bzw. -ventil, ein zweites, stromlos geschlossenes 2/2-Wege-Magnetventile den Anschluss zum Anhängersteuermodul, bzw. -ventil zur Atmosphäre. Durch Bestromung des ersten 2/2- Wege-Magnetventile kann die Verbindung zwischen Ventileinheit und dem Anhängersteuermodul, bzw. -ventil geblockt werden. Dann kann durch gepulstes Ansteuern des zweiten 2/2-Wege-Magnetventils der Druck zum Anhängersteuermodul, bzw. -ventil gestuft abgebaut, durch kurzzeitiges Abschalten des ersten 2/2-Wege-Magnetventils wieder erhöht werden.

Wie bereits oben erwähnt, kann die elektromagnetische Ventileinrichtung an die Ventileinheit angeblockt oder angeflanscht sein, wobei dann der erste Ausgangsanschluss der Ventileinheit mit einem Eingangsanschluss der elektromagnetischen Ventileinrichtung direkt verbunden werden kann.

Auch kann die elektromagnetische Ventileinrichtung an das Anhängersteuermodul bzw. -ventil angeblockt bzw. angeflanscht sein, wobei dann ein Ausgangsanschluss der elektromagnetischen Ventileinrichtung mit dem Steueranschluss des Anhängersteuermoduls bzw. -ventils direkt verbunden sein kann.

Denkbar ist dabei ein Aneinanderflanschen der Gehäuse bzw. Ventilblöcke der Ventileinheit und der elektromagnetischen Ventileinrichtung bzw. der elektromagnetischen Ventileinrichtung und des Anhängersteuermoduls bzw. -ventils, wobei die elektromagnetische Ventileinrichtung, die Ventileinheit und das Anhängersteuermodul bzw. -ventil aber jeweils separate Gehäuse bzw. Ventilblöcke aufweisen. Auch ein Zusammenschrauben der Anschlüsse mittels eines kurzen Rohrstückes mit Außengewinde ist möglich.

Alternativ könnten die Ventileinheit, die elektromagnetische Ventileinrichtung und das Anhängersteuermodul bzw. -ventil auch räumlich getrennt voneinander angeordnet und dann über jeweils einen Abschnitt der pneumatischen Verbindung miteinander verbunden sein.

Vorzugsweise kann in die elektromagnetische Ventileinrichtung wenigstens ein Drucksensor integriert sein, welcher ein dem Druck am pneumatischen Steueranschluss des Anhängersteuermoduls oder Anhängersteuerventils entsprechendes Signal erzeugt und in das eine Steuergerät oder in das weitere Steuergerät einsteuert, zur Regelung des Drucks am pneumatischen Steueranschluss des Anhängersteuermoduls. Auf diese Weise kann der Steuerdruck für die Streckbremsfunktion im Sinne eines Soll-Istwert-Abgleichs geregelt werden.

Anstatt die Steuerroutinen für die Streckbremsfunktion in dem einen Steuergerät zu implementieren, welches auch die restlichen Funktionen der elektro-pneumatischen Federspeicherbremseinrichtung steuert, können diese Steuerroutinen auch in einem hiervon separaten, weiteren Steuergerät implementiert sein, das ausschließlich die Streckbremsfunktion steuert bzw. regelt. Denkbar ist aber auch eine Integration der Steuerroutinen für die Streckbremsfunktion in irgendein bereits vorhandenes elektronisches Steuergerät des Zugfahrzeugs.

Wie bereits oben erwähnt können der Signalgeber, das Steuergerät und die Ventileinheit ausgebildet sein, dass neben der Parkbremsfunktion noch wenigstens eine der folgenden Funktionen ausgeführt werden können:
a) eine Hilfsbremsfunktion, bei welcher eine Feststellbremse des Zugfahrzeugs und die Anhängerbremse gestuft zugespannt bzw. gelöst werden,
b) einer Testfunktion, bei welcher die Feststellbremse des Zugfahrzeugs zugespannt und die Anhängerbremse gelöst ist.

Der Signalgeber zum Eingeben von Betätigungssignalen für die Streckbremsfunktion kann ein manuell betätigbarer Feststellbremssignalgeber sein, mit dem auch die weiteren Funktionen im Zusammenhang mit der Feststellbremseinrichtung betätigt werden können. Der Feststellbremssignalgeber ist dann ausgebildet, dass er ein der Streckbremsfunktion entsprechendes Streckbremssignal erzeugen kann. Alternativ kann ein separater, vom Feststellbremssignalgeber unabhängiger, beispielsweise ebenfalls manuell betätigbarer Streckbremssignalgeber zum Erzeugen des der Streckbremsfunktion entsprechenden Streckbremssignals vorgesehen sein. Nicht zuletzt kann der Streckbremssignalgeber aber auch durch ein elektronisches Steuergerät gebildet werden, welches die elektrischen Streckbremssignale zum Aktivieren der Streckbremsfunktion automatisch und ohne Zutun des Fahrers beispielsweise in Abhängigkeit von gemessenen Eingangsgrößen wie einem Knickwinkel zwischen Zugfahrzeug und Anhänger erzeugt.

Die Erfindung umfasst nicht zuletzt auch ein Zugfahrzeug, welches eine oben beschriebene elektro-pneumatische Feststellbremseinrichtung beinhaltet. Ein solches Zugfahrzeug ist dann meist auch mit einer elektro-pneumatischen Betriebsbremseinrichtung versehen.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Identische bzw. gleich wirkende Bauteile und Baugruppen sind in unterschiedlichen Ausführungsformen jeweils mit denselben Bezugszahlen bezeichnet.

### Zeichnung

In der Zeichnung zeigt
- Fig.1: ein schematisches Schaltbild einer bevorzugten Ausführungsform einer elektro-pneumatischen Feststellbremseinrichtung für eine Zugfahrzeug-Anhängerkombination gemäß der Erfindung, mit einer separaten elektromagnetischen Ventileinrichtung zum Ausführen einer Streckbremsfunktion gemäß der Erfindung;
- Fig.2: eine Ausführungsform der elektromagnetischen Ventileinrichtung in Form eines 3/2-Wege-Magnetventils;
- Fig.3: eine weitere Ausführungsform der elektromagnetischen Ventileinrichtung in Form von zwei 2/2-Wege-Magnetventilen gemäß der Erfindung;
- Fig.4: eine weitere Ausführungsform der elektromagnetischen Ventileinrichtung in Form eines 3/2-Wege-Magnetventils und eines 2/2-Wege-Magnetventils;
- Fig.5: eine weitere Ausführungsform der elektromagnetischen Ventileinrichtung in Form eines Proportionalventils.

### Beschreibung der Ausführungsbeispiele

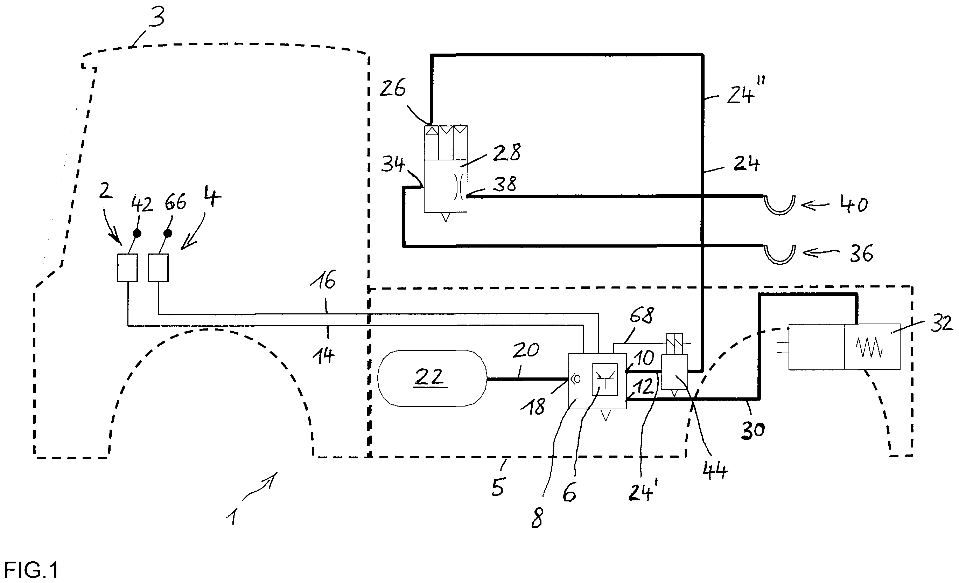

Die in Fig.1 gezeigte bevorzugte Ausführungsform einer elektro-pneumatischen Feststellbremseinrichtung 1 eines Zugfahrzeugs, das zum Ziehen eines Anhängers vorgesehen ist, beinhaltet einen elektrischen Feststellbremssignalgeber 2, einen elektrischen Streckbremssignalgeber 4, ein elektronisches Feststellbremssteuergerät 6, welches abhängig von den elektrischen Signalen des Feststellbremssignalgebers 2 bzw. des Streckbremssignalgebers 4 elektromagnetische Ventile einer Ventileinheit 8 ansteuert, die abhängig von dieser Ansteuerung entsprechende pneumatische Signale an einen ersten Ausgangsanschluss 10 und an einen zweiten Ausgangsanschluss 12 der Ventileinheit 8 aussteuert. Die Ventileinheit 8 ist bevorzugt am Chassis 5 des Zugfahrzeugs angeordnet.

Der Feststellbremssignalgeber 2 und der Streckbremssignalgeber 4 sind jeweils in einer Kabine 3 des Zugfahrzeugs angeordnet und über eine elektrische Steuerleitung 14, 16 mit dem elektronischen Feststellbremssteuergerät 6 verbunden. Die elektrische Steuerleitung kann eine direkte Kabelverbindung zwischen dem Signalgeber 2, 4 und dem elektronischen Feststellbremssteuergerät oder eine Datenbusverbindung sein, die eventuell auch über verschiedene zwischen geschaltete und z.B. als Router dienende andere Steuergeräte geführt ist. Die über die elektrische Steuerleitung übertragenen Signale können direkt die Steuergröße repräsentierende elektrische Größen oder digital codiert sein. Das elektronische Feststellbremssteuergerät 6 ist mit der Ventileinheit 8 bevorzugt zu einer Baueinheit verbaut. Es können auch weitere, hier nicht gezeigte Systeme oder Systemteile, z.B. der Luftaufbereitung, der Luftfederung oder der Betriebsbremse in diese Baueinheit integriert sein. Ein Vorratsanschluss 18 der Ventileinheit 8 steht über eine pneumatische Vorratsleitung 20 mit einem Druckluftvorrat 22 in Verbindung. Der erste Ausgangsanschluss 10 der Ventileinheit 8 ist über eine erste pneumatische Leitung 24 mit einem pneumatischen Steueranschluss 26 eines Anhängersteuermoduls 28 verbunden, der zweite Ausgangsanschluss 12 über eine zweite, pneumatische Leitung 30 mit den als Feststellbremse eingesetzten Federspeicherbremszylindern 32 des Zugfahrzeugs.

Das Anhängersteuermodul 28 invertiert an seinem pneumatischen Steueranschluss 26 den pneumatischen Steuerdruck in bekannter Weise, d.h. dass ein am pneumatischen Steueranschluss 26 anstehender, hoher Druck in einen niedrigen Druck an einem ersten Ausgangsanschluss 34 des Anhängersteuermoduls 28 invertiert wird, und ein niedriger Druck in einen hohen Druck. Der erste Ausgangsanschluss 34 des Anhängersteuermoduls 28 steht mit einem Kupplungskopf "Bremse" 36 des Zugfahrzeugs in Verbindung, an welchen eine mit Bremsen des Anhängers verbundene Bremsleitung des Anhängers ankoppelbar ist. Weiterhin ist das Anhängersteuermodul 28 über eine hier nicht gezeigte Vorratsleitung mit dem Druckluftvorrat 22 oder mit einem weiteren Druckluftvorrat verbunden. Ein zweiter Ausgangsanschluss 38 des Anhängersteuermoduls 28 ist mit einem Kupplungskopf "Vorrat" 40 des Zugfahrzeugs verbunden, an welchen eine Vorratsleitung des Anhängers ankoppelbar ist.

Die elektromagnetischen Ventile der Ventileinheit 8 sind ausgebildet und vom Feststellbremssteuergerät 6 abhängig von den elektrischen Signalen des Feststellbremssignalgebers 2 so angesteuert, dass sie wenigstens einer "Fahrfunktion" und einer "Parkbremsfunktion" entsprechende pneumatische Signale an den ersten Ausgangsanschluss 10 und an den zweiten Ausgangsanschluss 12 der Ventileinheit 8 aussteuern.

Unter "Fahrfunktion" ist der gelöste Zustand der Federspeicherbremszylinder 32 des Zugfahrzeugs und der Bremsen des Anhängers zu verstehen. Hierbei wird ein Betätigungsorgan des Feststellbremssignalgebers 2, insbesondere ein Betätigungshebel 42 in die Position "Fahren" geschwenkt, wodurch dieser Position "Fahren" entsprechende Signale in das Feststellbremssteuergerät 6 eingesteuert werden, welches dann die elektromagnetischen Ventile der Ventileinheit 8 so steuert, dass der erste Ausgangsanschluss 10, der mit dem pneumatischen Steueranschluss 26 des Anhängermoduls 28 hier indirekt in Verbindung steht, belüftet wird, um nach Druckinvertierung im Anhängersteuermodul 28 eine Druckreduzierung am Kupplungskopf "Bremse" zu erzielen, damit die aktiven Bremsen des Anhängers gelöst werden können. Unter "aktiven" Bremsen werden Bremsen verstanden, die belüftet zuspannen und entlüftet lösen. Andererseits werden die elektromagnetischen Ventile der Ventileinheit 8 durch den in "Fahren" geschwenkten Betätigungshebel 42 des Feststellbremssignalgebers 2 durch das Feststellbremssteuergerät 6 so angesteuert, dass der zweite Ausgangsanschluss 12 der Ventileinheit 8, welcher mit den Federspeicherbremszylindern 32 des Zugfahrzeugs verbunden ist, belüftet wird, um diese Federspeicherbremszylinder 32 als passive Bremse gelöst zu halten. Unter "passiven" Bremsen werden Bremsen verstanden, die belüftet lösen und entlüftet zuspannen.

Wenn hingegen der Betätigungshebel 42 des Feststellbremssignalgebers 2 in die Position "Parken" geschwenkt, wodurch dieser Position "Parken" entsprechende Signale in das Feststellbremssteuergerät 6 eingesteuert werden, so werden die elektromagnetischen Ventile der Ventileinheit 8 so gesteuert, dass der zweite Ausgangsanschluss 12 der Ventileinheit, welcher mit den Federspeicherbremszylindern 32 des Zugfahrzeugs verbunden ist, entlüftet wird, um die Federspeicherbremszylinder 32 des Zugfahrzeugs zuzuspannen.

Je nach länderspezifischer oder fahrzeugspezifischer Anforderung können im Zustand "Parken" die Anhängerbremsen entweder gelöst oder zugespannt sein. Im letzten Fall wird die elektromagnetischen Ventile der Ventileinheit 8 vom Feststellbremssteuergerät 6 so angesteuert, dass der erste Ausgangsanschluss 10, der mit dem pneumatischen Steueranschluss 26 des Anhängersteuermoduls 28 hier in indirekter Verbindung steht, entlüftet wird, um nach Druckinvertierung im Anhängersteuermodul 28 eine Druckerhöhung am Kupplungskopf "Bremse" 36 zu erzielen, damit die aktiven Bremsen des Anhängers zugespannt werden können.

Weiterhin ist die hier beschriebene elektro-pneumatische Feststellbremseinrichtung 1 des Zugfahrzeugs bevorzugt ausgebildet, dass neben der "Fahrfunktion" und der "Parkfunktion" auch eine "Hilfsbremsfunktion" sowie eine "Testfunktion" ausgeführt werden können.

Bei der "Hilfsbremsfunktion" werden die Federspeicherbremszylinder 32 des Zugfahrzeugs und die Bremsen des Anhängers gestuft zugespannt bzw. gelöst. Dies wird beispielsweise durch Schwenken des Betätigungshebels 42 des Feststellbremssignalsgebers 2 in einem Schwenkwinkelbereich erzielt, der zwischen den Positionen "Fahren" und "Parken" angeordnet ist. Je nach Betätigungsgrad bzw. -winkel wird eine bestimmte Bremswirkung hervorgerufen. Dabei steuert das Feststellbremssteuergerät 6 die elektromagnetischen Ventile der Ventileinheit 8 so an, dass an den ersten Ausgangsanschluss 10 und an den zweiten Ausgangsanschluss 12 in gestufter Weise Drücke ausgesteuert werden, die eine dem Betätigungswinkel des Betätigungshebels 42 des Feststellbremsgebers 2 entsprechende Bremswirkung der Federspeicherbremszylinder 32 bzw. der Bremsen des Anhängers hervorrufen.

Bei der "Testfunktion" werden die Federspeicherbremszylinder 32 des Zugfahrzeugs entlüftet und damit zugespannt und die Bremsen des Anhängers gelöst ist, um zu testen, ob das eingebremste Zugfahrzeug den ungebremsten Anhänger beispielsweise an einem Gefälle halten kann. Entsprechend wird hierzu der erste Ausgangsanschluss 10 der Ventileinheit belüftet und der zweite Ausgangsanschluss 12 der Ventileinheit entlüftet.

Eine Ventileinheit 8 aus elektromagnetischen Ventilen, welche angesteuert durch ein Feststellbremssteuergerät 6 die genannten Funktionen steuern können, ist hinlänglich bekannt. Eine solche Ventileinheit 8 ist bevorzugt "bistabil" ausgeführt. Dass heißt, dass auch bei einem Stromausfall die zuletzt eingenommene Schaltstellung beibehalten wird.

Damit zusätzlich zu den oben genannten Funktionen auch eine eingangs erläuterte "Streckbremsfunktion" ausgeführt werden kann, ist in der ersten pneumatischen Leitung 24 zwischen dem ersten Ausgangsanschluss 10 der Ventileinheit 8 und dem pneumatischen Steueranschluss 26 des Anhängersteuermoduls 28 eine separate elektromagnetische Ventileinrichtung 44 angeordnet, die beispielsweise auch am Chassis 5 des Zugfahrzeugs gehalten ist.

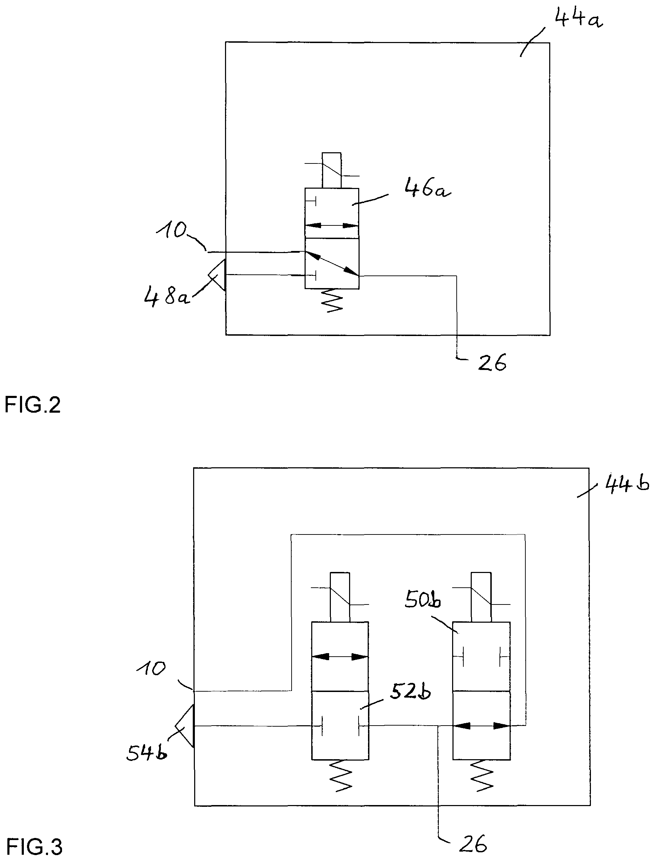

Gemäß einer bevorzugten, in Fig.2 gezeigten Ausführungsform beinhaltet die separate elektromagnetische Ventileinrichtung 44a ein einziges 3/2-Wege-Magnetventil 46a. Als kombiniertes Be- und Entlüftungsventil verbindet das 3/2-Wege-Magnetventil 46a in seiner ersten, in Fig.3 gezeigten unbestromten Schaltstellung den pneumatischen Steueranschluss 26 des Anhängersteuermoduls 28 mit dem ersten Ausgangsanschluss 10 der Ventileinheit 8 und seiner bestromten Schaltstellung mit einer Drucksenke, z.B. mit einem Entlüftungsanschluss 48a. Durch Hin- und Herschalten des 3/2-Wege-Magnetventils 46a zwischen Belüftungs- und Entlüftungsstellung und Variation der Längen der Bestromt- und Unbestromt-Phasen kann dann ein definierter Druck in den pneumatischen Steueranschluss 26 des Anhängersteuermoduls 28 eingesteuert werden.

Gemäß der Ausführungsform von Fig.3 besteht die elektromagnetische Ventileinrichtung 44b aus zwei 2/2-Wege-Magnetventilen 50b und 52b, von denen eines als Belüftungsventil 50b bestromt geschlossen und unbestromt offen ist. Im in Fig.3 gezeigten unbestromten Zustand verbindet das Belüftungsventil 50b dann den ersten Ausgangsanschluss der Ventileinheit mit dem pneumatischen Steueranschluss des Anhängersteuermodul bzw. -ventils. Das andere 2/2-Wege-Magnetventil 52b ist als Entlüftungsventil unbestromt geschlossen und bestromt offen und verbindet im bestromten Zustand den pneumatischen Steueranschluss 26 des Anhängersteuermoduls 28 mit einem Entlüftungsanschluss 54b. Der pneumatische Steuerdruck am pneumatischen Steueranschluss 26 des Anhängersteuermoduls 28 kann dann durch gepulstes Ansteuern der beiden 2/2-Wege-Magnetventile 50b, 52b erhöht, gesenkt oder gehalten werden.

Ein solches Paar von 2/2-Wege-Magnetventilen 50b, 52b, die intern aus von einem Magnetventil vorgesteuerten Membranventil bestehen, ist beispielsweise in einem handelsüblichen ABS-Drucksteuerventil enthalten, so dass in vorteilhafter Weise ein solches ABS-Drucksteuerventil als elektromagnetische Ventileinrichtung 44b herangezogen werden kann.

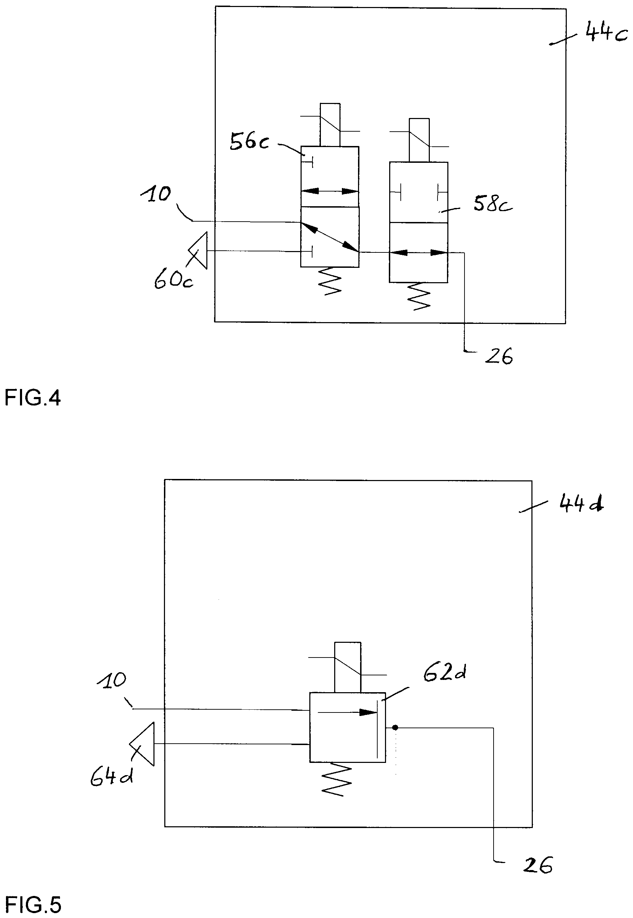

Bei der in Fig.4 gezeigten Ausführungsform der elektromagnetischen Ventileinrichtung 44c sind ein 3/2-Wege-Magnetventil 56c und ein 2/2-Wege-Magnetventil 58c in Reihe hintereinandergeschaltet. Das 2/2-Wege-Magnetventil 58c stellt dann ein Halteventil dar, welches in seine Geschlossenstellung geschaltet wird, um den vom 3/2-Wege-Magnetventil 56c als Be- und Entlüftungsventil eingestellten Druck am pneumatischen Steueranschluss 26 des Anhängersteuermoduls 28 konstant zu halten. Das 3/2-Wege-Magnetventil 58c weist wiederum einen Entlüftungsanschluss 60c auf.

Alternativ könnte anstatt Schaltventilen gemäß Fig.5 auch wenigstens ein elektropneumatisches Proportionalventil 62d als separate, die Streckbremsfunktion ausführende elektromagnetische Ventileinrichtung 44d vorgesehen werden. Dieses elektro-pneumatische Proportionalventil 62d steuert abhängig von seiner elektrischen Bestromung oder Ansteuerung den aus dem ersten Ausgangsanschluss 10 der Ventileinheit 8 ausgesteuerten Druckwert (Druckluft unter Vorratsdruck) an den pneumatischen Steueranschluss 26 des Anhängersteuermoduls 28 weiter oder nur einen Bruchteil davon, wobei hiervon auch eine Geschlossenstellung des Proportionalventils 62d beinhaltet ist. Überschüssige Druckluft wird über einen Entlüftungsanschluss 64d an die Atmosphäre abgegeben. Unbestromt steuert das Proportionalventil 62d den Druck unverändert durch.

Wenn dann beispielsweise durch manuelle Betätigung eines Betätigungshebels 66 des Streckbremssignalgebers 4 die "Streckbremsfunktion" aktiviert wird, dann werden die elektromagnetischen Ventile der Ventileinheit 8 von dem Feststellbremssteuergerät 6 durch Streckbremssignale derart angesteuert, dass der erste Ausgangsanschluss 10 der Ventileinheit 8 mit dem Vorratsanschluss 19 der Ventileinheit 8 verbunden ist, um Druckluft unter Vorratsdruck an den ersten Ausgangsanschluss 10 der Ventileinheit 8 aussteuern zu können. Weiterhin wird der zweite Ausgangsanschluss 12 der Ventileinheit 8 belüftet, um die Federspeicherbremszylinder 32 des Zugfahrzeugs gelöst zu halten.

Zudem wird die elektromagnetische Ventileinrichtung 44, also das wenigstens eine elektromagnetische Schaltventil oder das wenigstens eine elektromagnetische Proportionalventil einer der oben beschriebenen Ausführungsformen über eine elektrische Steuerleitung 68 von dem Feststellbremssteuergerät 6 oder von einem weiteren Steuergerät derart angesteuert, dass sie an den pneumatischen Steueranschluss 26 des Anhängersteuermoduls 28 einen abhängig von den Streckbremssignalen dosierten Steuerdruck aussteuert.

Übertragen auf das Ausführungsbeispiel von Fig.2 bedeutet dies, dass dort das 3/2-Wegeventil 46a abwechselnd in seine Be- und Entlüftungsstellung geschaltet wird. Bei der Ausführungsform von Fig.3 werden das Belüftungsventil 50b und das Entlüftungsventil 52b abwechselnd in ihre Be- und Entlüftungsstellungen geschaltet.

Die elektromagnetischen Schaltventile wie 3/2-Wege-Magnetventil und 2/2-Wege-Magnetventile werden daher bevorzugt gepulst angesteuert. Das gepulste Ansteuern kann beispielsweise frequenzmoduliert und, insbesondere bei konstanter Frequenz, pulsweitenmoduliert erfolgen. Indem nun solche Schaltventile beispielsweise pulsweitenmoduliert angesteuert werden, das heißt mit einem bestimmten Tastverhältnis zwischen dem belüftenden und dem entlüftenden Zustand umgeschaltet werden können, ist eine quasi kontinuierliche Druckdosierung im Bereich der ausgesteuerten Steuerdruckluft für den pneumatischen Steueranschluss 26 des Anhängersteuermoduls 28 erzielbar.

Für die Funktionen "Fahrfunktion", "Parkbremsfunktion", "Hilfsbremsfunktion" und "Testfunktion" darf die elektromagnetische Ventileinrichtung 44 die Weiterleitung von entsprechend gesteuerter Druckluft vom ersten Ausgangsanschluss 10 der Ventileinheit 8 in den pneumatischen Steueranschluss 26 des Anhängersteuermoduls nicht behindern. Deshalb werden das wenigstens eine elektromagnetische Schaltventile bzw. das wenigstens eine Proportionalventil der elektromagnetischen Ventileinrichtung 44 in diesen Fällen so geschaltet bzw. eingestellt, dass die elektromagnetische Ventileinrichtung 44 diesen Druck unbeeinflusst durchsteuert.

Die elektromagnetische Ventileinrichtung 44 kann sowohl von der Ventileinheit 8 und vom Anhängersteuermodul 28 räumlich beabstandet angeordnet sein. Diese Situation ist in Fig.1 dargestellt, bei welcher die elektromagnetische Ventileinrichtung 44 in der ersten pneumatischen Leitung 24 angeordnet ist, wobei jeweils noch ein Abschnitt 24' bzw. 24" dieser ersten pneumatischen Leitung 24 einerseits zwischen der der Ventileinheit 8 und der elektromagnetischen Ventileinrichtung 44 und andererseits zwischen der elektromagnetischen Ventileinrichtung 44 und dem pneumatischen Steueranschluss 26 des Anhängersteuermoduls 28 vorhanden ist.

Alternativ kann die elektromagnetische Ventileinrichtung 44 mit ihrem eigenen separaten Gehäuse bzw. Ventilblock an die Ventileinheit 8 oder an das Anhängersteuermodul 26 angeblockt oder angeflanscht oder mittels eines starren Rohrstücks mit Außengewinde an ihren Anschlüssen zusammengeschraubt sein, wobei dann der erste Ausgangsanschluss 10 der Ventileinheit 8 mit einem Eingangsanschluss der elektromagnetischen Ventileinrichtung 44 bzw. ein Ausgangsanschluss der elektromagnetischen Ventileinrichtung 44 mit dem elektropneumatischen Steueranschluss 26 des Anhängersteuermoduls 28 direkt verbunden ist. Dabei weisen die elektromagnetische Ventileinrichtung 44, das Anhängersteuermodul 28 und die Ventileinheit 8 jeweils separate Gehäuse bzw. Ventilblöcke auf.

Vorzugsweise kann in die elektromagnetische Ventileinrichtung 44 auch wenigstens ein hier nicht gezeigter Drucksensor integriert sein, welcher ein dem Druck an dem pneumatischen Steueranschluss 26 des Anhängersteuermoduls 28 entsprechendes Signal erzeugt und in das Feststellbremssteuergerät 6 bzw. in ein weiteres Steuergerät einsteuert, zur Regelung des Drucks am pneumatischen Steueranschluss 26 des Anhängersteuermoduls 28. Auf diese Weise kann der Steuerdruck für die Streckbremsfunktion im Sinne eines Soll-Istwert-Abgleichs geregelt werden. Der Sollwert für die Streckbremse, welcher dann beispielsweise einem bestimmten Bremsdruck im Anhänger entspricht, wird vorzugsweise abhängig von einer Betätigung des betreffenden Betätigungshebels 42, 66 durch den Streckbremssignalgeber 4 oder den Feststellbremssignalgeber 2 vorgegeben, oder aber auch durch ein elektronisches Steuergerät.

Anstatt die Steuerroutinen für die "Streckbremsfunktion" in dem Feststellbremssteuergerät 6 zu implementieren, welches auch die restlichen Funktionen der elektro-pneumatischen Federspeicherbremseinrichtung 1 steuert, können diese Steuerroutinen auch in einem hiervon separaten, weiteren Steuergerät implementiert sein, das beispielsweise ausschließlich die Streckbremsfunktion steuert bzw. regelt. Denkbar ist aber auch eine Integration der Steuerroutinen für die "Streckbremsfunktion" in irgendein bereits vorhandenes Steuergerät des Zugfahrzeugs.

Anstatt eines eigenen Streckbremssignalgebers 4 zum Eingeben der Streckbremssignale für die "Streckbremsfunktion" kann alternativ auch der Feststellbremssignalgeber 2 ausgebildet sein, diese Streckbremssignale zu erzeugen.

Nicht zuletzt kann der Streckbremssignalgeber 4, der die Streckbremssignale für das Feststellbremssteuergerät 6 erzeugt, auch durch ein elektronisches Steuergerät gebildet werden, welches die elektrischen Streckbremssignale zum Ausführen der "Streckbremsfunktion" automatisch und ohne Zutun des Fahrers beispielsweise in Abhängigkeit von gemessenen Eingangsgrößen wie einem Knickwinkel zwischen Zugfahrzeug und Anhänger erzeugt.

### Bezugszeichenliste

- 1: Feststellbremseinrichtung
- 2: Feststellbremssignalgeber
- 3: Kabine
- 4: Streckbremssignalgeber
- 5: Chassis
- 6: Feststellbremssteuergerät
- 8: Ventileinheit
- 10: erster Ausgangsanschluss
- 12: zweiter Ausgangsanschluss
- 14: elektrische Steuerleitung
- 16: elektrische Steuerleitung
- 18: Vorratsanschluss
- 20: Vorratsleitung
- 22: Druckluftvorrat
- 24: erste pneumatische Leitung
- 26: pneumatischer Steueranschluss
- 28: Anhängersteuermodul
- 30: zweite pneumatische Leitung
- 32: Federspeicherbremszylinder
- 34: erster Ausgangsanschluss
- 36: Kupplungskopf "Bremse"
- 38: zweiter Ausgangsanschluss
- 40: Kupplungskopf "Vorrat"
- 42: Betätigungshebel
- 44: elektromagnetische Ventileinrichtung
- 46a: 3/2-Wege-Magnetventil
- 48a: Entlüftungsanschluss
- 50b: 2/2-Wege-Magnetventil
- 52b: 2/2-Wege-Magnetventil
- 54b: Entlüftungsanschluss
- 56c: 3/2-Wege-Magnetventil
- 58c: 2/2-Wege-Magnetventil
- 60c: Entlüftungsanschluss
- 62d: Proportionalventil
- 64d: Entlüftungsanschluss
- 66: Betätigungshebel
- 68: elektrische Steuerleitung

## Patentansprüche

1. Elektro-pneumatische Feststellbremseinrichtung (1) für ein Zugfahrzeug einer Zugfahrzeug-Anhängerkombination, mit einem wenigstens einer Fahrfunktion und einer Parkbremsfunktion entsprechende elektrische Signale erzeugenden Feststellbremssignalgeber (2), wenigstens einem elektronischen Steuergerät (6), welches abhängig von den elektrischen Signalen wenigstens ein elektromagnetisches Ventil einer Ventileinheit (8) ansteuert, die einerseits über einen Vorratsanschluss (18) mit einem Druckluftvorrat (22) verbunden ist und die andererseits abhängig von dieser Ansteuerung wenigstens der Fahrfunktion und der Parkfunktion entsprechende pneumatische Signale an ihre Ausgangsanschlüsse (10, 12) aussteuert, von denen ein erster Ausgangsanschluss (10) mittels einer pneumatischen Verbindung (24) mit einem pneumatischen Steueranschluss (26) eines Anhängersteuermoduls (28) oder Anhängersteuerventils verbunden ist, von dem ein Ausgangsanschluss (34) mit einem Kupplungskopf "Bremse" (36) in Verbindung steht, und von denen ein zweiter Ausgangsanschluss (12) mit Federspeicherbremszylindern (32) des Zugfahrzeugs verbunden ist, wobei in der pneumatischen Verbindung (24) zwischen dem ersten Ausgangsanschluss (10) der Ventileinheit (8) und dem pneumatischen Steueranschluss (26) des Anhängersteuermoduls (28) oder Anhängersteuerventils eine separate elektromagnetische Ventileinrichtung (44b) angeordnet ist, wobei zur Realisierung einer Streckbremsfunktion zum Einbremsen des Anhängers unabhängig vom Zugfahrzeug auf vom Feststellbremssignalgeber (2) oder von einem weiteren Signalgeber erzeugte, der Streckbremsfunktion entsprechende elektrische Streckbremssignale hin
a) wenigstens ein elektromagnetisches Ventil der Ventileinheit (8) von dem Steuergerät (6) derart angesteuert ist, dass der erste Ausgangsanschluss (10) mit dem Vorratsanschluss (18) verbunden und der zweite Ausgangsanschluss (12) belüftet ist,
b) die elektromagnetische Ventileinrichtung (44b) derart ausgebildet und von dem Steuergerät (6) oder von einem weiteren Steuergerät derart angesteuert ist, dass sie an den pneumatischen Steueranschluss (26) des Anhängersteuermoduls (28) oder des Anhängersteuerventils einen abhängig von den Streckbremssignalen dosierten Steuerdruck aussteuert, **dadurch gekennzeichnet, dass**
c) die elektromagnetische Ventileinrichtung (44b) wenigstens ein elektromagnetisches Schaltventil (50b, 52b) beinhaltet, und
d) die elektromagnetische Ventileinrichtung (44b) durch zwei 2/2-Wege-Magnetventile (50b, 52b) gebildet wird, wobei
e) die elektromagnetische Ventileinrichtung (44b) durch ein ABS-Drucksteuerventil gebildet wird.

2. Elektro-pneumatische Feststellbremseinrichtung nach Anspruch 1, **dadurch gekennzeichnet, dass** die elektromagnetische Ventileinrichtung (44b) zwischen die Ventileinheit (8) und das Anhängersteuermodul (28) bzw. das Anhängersteuerventil in Reihe geschaltet ist.

3. Elektro-pneumatische Feststellbremseinrichtung nach einem der Ansprüche 1 oder 2, **dadurch gekennzeichnet, dass** das wenigstens eine elektromagnetische Schaltventil (50b, 52b) der elektromagnetischen Ventileinrichtung (44b) gepulst angesteuert ist.

4. Elektro-pneumatische Feststellbremseinrichtung nach einem der vorhergehenden Ansprüche, **dadurch gekennzeichnet, dass** die elektromagnetische Ventileinrichtung (44b) an die Ventileinheit (8) angeblockt oder angeflanscht ist, wobei der erste Ausgangsanschluss (10) der Ventileinheit (8) mit einem Eingangsanschluss der elektromagnetischen Ventileinrichtung (44b) direkt verbunden ist.

5. Elektro-pneumatische Feststellbremseinrichtung nach einem der vorhergehenden Ansprüche, **dadurch gekennzeichnet, dass** die elektromagnetische Ventileinrichtung (44b) an das Anhängersteuermodul (28) bzw. Anhängersteuerventil angeblockt oder angeflanscht ist, wobei ein Ausgangsanschluss der elektromagnetischen Ventileinrichtung (44b) mit dem pneumatischen Steueranschluss (26) des Anhängersteuermoduls (28) bzw. Anhängersteuerventils direkt verbunden ist.

6. Elektro-pneumatische Feststellbremseinrichtung nach einem der vorhergehenden Ansprüche, **dadurch gekennzeichnet, dass** die Ventileinheit (8), die elektromagnetische Ventileinrichtung (44b) und das Anhängersteuermodul (28) bzw. Anhängersteuerventil separate Gehäuse bzw. Ventilblöcke aufweisen.

7. Elektro-pneumatische Feststellbremseinrichtung nach einem der vorhergehenden Ansprüche, **dadurch gekennzeichnet, dass** in die elektromagnetische Ventileinrichtung (44b) wenigstens ein Drucksensor integriert ist, welcher ein dem Druck am pneumatischen Steueranschluss (26) des Anhängersteuermoduls (28) oder Anhängersteuerventils entsprechendes Signal erzeugt und in das eine Steuergerät (6) oder in das weitere Steuergerät einsteuert, zur Regelung des Drucks am pneumatischen Steueranschluss (26) des Anhängersteuermoduls (28).

8. Elektro-pneumatische Feststellbremseinrichtung nach einem der vorhergehenden Ansprüche, **dadurch gekennzeichnet, dass** das weitere Steuergerät ausgebildet ist, dass es ausschließlich die Streckbremsfunktion steuert bzw. regelt.

9. Elektro-pneumatische Feststellbremseinrichtung nach einem der vorhergehenden Ansprüche, **dadurch gekennzeichnet, dass** der Feststellbremssignalgeber (2), das Steuergerät (6) und die Ventileinheit (8) ausgebildet sind, dass neben der Fahrfunktion und der Parkbremsfunktion noch wenigstens eine der folgenden Funktionen ausgeführt werden können:
a) eine Hilfsbremsfunktion, bei welcher eine Feststellbremse des Zugfahrzeugs und die Anhängerbremse gestuft zugespannt bzw. gelöst werden,
b) einer Testfunktion, bei welcher die Feststellbremse des Zugfahrzeugs zugespannt und die Anhängerbremse gelöst ist.

10. Elektro-pneumatische Feststellbremseinrichtung nach Anspruch 9, **dadurch gekennzeichnet, dass** der Feststellbremssignalgeber (2) ausgebildet ist, dass er die der Streckbremsfunktion entsprechenden Streckbremssignale erzeugt, oder dass ein weiterer, separater und vom Feststellbremssignalgeber (2) unabhängiger Streckbremssignalgeber (4) zum Erzeugen der der Streckbremsfunktion entsprechenden Streckbremssignale vorgesehen ist.

11. Elektro-pneumatische Feststellbremseinrichtung nach Anspruch 10, **dadurch gekennzeichnet, dass** der Streckbremssignalgeber (4) ein manuell betätigbarer Streckbremssignalgeber ist oder durch ein elektronisches Steuergerät gebildet wird.

12. Zugfahrzeug beinhaltend eine elektro-pneumatische Feststellbremseinrichtung nach einem der vorhergehenden Ansprüche.

## Claims

1. Electropneumatic parking brake device (1) for a tractor vehicle of a tractor vehicle-trailer combination, having a parking braking signal transmitter (2) which generates electrical signals corresponding at least to a driving function and to a parking braking function, at least one electronic control unit (6) which, in a manner dependent on the electrical signals, actuates at least one electromagnetic valve of a valve unit (8), which valve unit, at one side, is connected by way of a supply port (18) to a compressed-air supply (22) and, at the other side, at its outlet ports (10, 12), outputs pneumatic signals corresponding at least to the driving function and to the parking braking function in a manner dependent on said actuation, of which a first outlet port (10) is connected by way of a pneumatic connection (24) to a pneumatic control port (26) of a trailer control module (28) or trailer control valve, of which an outlet port (34) is connected to a "brake" coupling head (36), and of which a second outlet port (12) is connected to spring brake cylinders (32) of the tractor vehicle, wherein a separate electromagnetic valve device (44b) is arranged in the pneumatic connection (24) between the first outlet port (10) of the valve unit (8) and the pneumatic control port (26) of the trailer control module (28) or trailer control valve, wherein, to realize an anti-jackknife braking function for applying the brakes of the trailer independently of the tractor vehicle in response to electrical anti-jackknife braking signals which are generated by the parking braking signal transmitter (2) or by a further signal transmitter and which correspond to the anti-jackknife braking function,
a) at least one electromagnetic valve of the valve unit (8) is actuated by the control unit (6) such that the first outlet port (10) is connected to the supply port (18) and the second outlet port (12) is deaerated,
b) the electromagnetic valve device (44b) is designed, and actuated by the control unit (6) or by a further control unit, such that it outputs a control pressure, which is metered in a manner dependent on the anti-jackknife braking signals, to the pneumatic control port (26) of the trailer control module (28) or of the trailer control valve, **characterized in that**
c) the electromagnetic valve device (44b) comprises at least one electromagnetic switching valve (50b, 52b), and
d) the electromagnetic valve device (44b) is formed by two 2/2 directional solenoid valves (50b, 52b), wherein
e) the electromagnetic valve device (44b) is formed by an ABS pressure control valve.

2. Electropneumatic parking brake device according to Claim 1, **characterized in that** the electromagnetic valve device (44; 44a, 44b; 44c; 44d) is connected in series between the valve unit (8) and the trailer control module (28) or the trailer control valve.

3. Electropneumatic parking brake device according to one of Claims 1 and 2, **characterized in that** the at least one electromagnetic switching valve (50b, 52b) of the electromagnetic valve device (44b) is actuated in pulsed fashion.

4. Electropneumatic parking brake device according to one of the preceding claims, **characterized in that** the electromagnetic valve device (44b) is mounted as a block, or flange-mounted, on the valve unit (8), wherein the first outlet port (10) of the valve unit (8) is directly connected to an inlet port of the electromagnetic valve device (44b).

5. Electropneumatic parking brake device according to one of the preceding claims, **characterized in that** the electromagnetic valve device (44b) is mounted as a block, or flange-mounted, on the trailer control module (28) or trailer control valve, wherein an outlet port of the electromagnetic valve device (44b) is directly connected to the pneumatic control port (26) of the trailer control module (28) or trailer control valve.

6. Electropneumatic parking brake device according to one of the preceding claims, **characterized in that** the valve unit (8), the electromagnetic valve device (44b) and the trailer control module (28) or trailer control valve have separate housings or valve blocks.

7. Electropneumatic parking brake device according to one of the preceding claims, **characterized in that**, into the electromagnetic valve device (44b), there is integrated at least one pressure sensor which generates a signal corresponding to the pressure at the pneumatic control port (26) of the trailer control module (28) or trailer control valve and inputs said signal into the one control unit (6) or into the further control unit for the purposes of regulation of the pressure at the pneumatic control port (26) of the trailer control module (28).

8. Electropneumatic parking brake device according to one of the preceding claims, **characterized in that** the further control unit is designed so as to control and/or regulate exclusively the anti-jackknife braking function.

9. Electropneumatic parking brake device according to one of the preceding claims, **characterized in that** the parking braking signal transmitter (2), the control unit (6) and the valve unit (8) are designed such that, in addition to the driving function and the parking braking function, at least one of the following functions can also be implemented:
a) an auxiliary braking function in which a parking brake of the tractor vehicle and the trailer brake are applied and released in stepped fashion,
b) a test function in which the parking brake of the tractor vehicle is applied and the trailer brake is released.

10. Electropneumatic parking brake device according to Claim 9, **characterized in that** the parking braking signal transmitter (2) is designed so as to generate anti-jackknife braking signals corresponding to the anti-jackknife braking function, or **in that** a further, separate anti-jackknife braking signal transmitter (4), which is independent of the parking braking signal transmitter (2), is provided for generating the anti-jackknife braking signals corresponding to the anti-jackknife braking function.

11. Electropneumatic parking brake device according to Claim 10, **characterized in that** the anti-jackknife braking signal transmitter (4) is a manually actuable anti-jackknife braking signal transmitter or is formed by an electronic control unit.

12. Tractor vehicle comprising an electropneumatic parking brake device according to one of the preceding claims.

## Revendications

1. Dispositif (1) électropneumatique de frein de stationnement, pour un véhicule tracteur d'une combinaison véhicule-tracteur-remorque, comprenant un producteur (2) de signal de frein de stationnement, produisant des signaux électriques correspondant à une fonction de marche et à une fonction de frein de stationnement, au moins un appareil (6) électronique de commande, qui, en fonction des signaux électriques, commande au moins une soupape électromagnétique d'une unité (8) de soupape, qui, d'une part, est, par un raccord (18) de réservoir, relié à un réservoir (22) d'air comprimé et qui, d'autre part, en fonction de signaux pneumatiques correspondant à cette commande d'au moins la fonction de marche et de la fonction de stationnement, commande ses raccords (10, 12) de sortie, dont un premier raccord (10) de sortie est relié au moyen d'une liaison (24) pneumatique à un raccord (26) pneumatique de commande d'un module (28) de commande de la remorque ou d'une soupape de commande de remorque, dont un raccord (34) de sortie est en liaison avec une tête d'accouplement « frein » (36) et dont un deuxième raccord (12) de sortie est relié à des cylindres (32) de frein à ressort accumulateur du véhicule tracteur, dans lequel, dans la liaison (24) pneumatique entre le premier raccord (10) de sortie de l'unité (8) de soupape et le raccord (26) pneumatique du module (28) de commande de la remarque ou de la soupape de commande de la remorque, est monté un dispositif (44b) de soupape électromagnétique distinct, dans lequel, pour réaliser une fonction de frein de maintien en ligne, pour freiner la remorque indépendamment du véhicule tracteur, sur des signaux électriques de frein de maintien en ligne produits par le producteur (2) de signal de frein de stationnement ou par un autre producteur de signal et correspondant à la fonction de frein de maintien en ligne
a) au moins une soupape électromagnétique de l'unité (8) de soupape est commandée par l'appareil (6) de commande, de manière à ce que le premier raccord (10) de sortie soit relié au raccord (18) de réservoir et de manière à ce que le deuxième raccord (12) de sortie soit alimenté en air,
b) le dispositif (44b) électromagnétique de soupape est constitué et est commandé par l'appareil (6) de commande ou par un autre appareil de commande, de manière à commander, sur le raccord (26) pneumatique de commande du module (28) de commande de la remorque ou de la soupape de commande de la remorque, une pression de commande dosée indépendamment des signaux de frein de maintien en ligne, **caractérisé en ce que**
c) le dispositif (44b) électromagnétique de soupape comporte au moins une soupape (50b, 52b) électromagnétique de commutation et
d) le dispositif (44b) électromagnétique de soupape est formé de deux électrovannes (50b, 52b) à 2/2 voies, dans lequel
e) le dispositif (44b) électromagnétique de soupape est formé par une vanne de commande de pression ABS.

2. Dispositif électropneumatique de fin de stationnement suivant la revendication 1, **caractérisé en ce que** le dispositif (44b) électromagnétique de soupape est monté en série entre l'unité (8) de soupape et le module (28) de commande de la remorque ou de la soupape de commande de la remorque.

3. Dispositif électropneumatique de fin de stationnement suivant l'une des revendications 1 ou 2, **caractérisé en ce que** la au moins une soupape (50b, 52b) électromagnétique de commutation du dispositif (44b) électromagnétique de soupape est commandée de manière pulsée.

4. Dispositif électropneumatique de fin de stationnement suivant l'une des revendications précédentes, **caractérisé en ce que** le dispositif (44b) électromagnétique de soupape est bloqué ou bridé sur l'unité (8) de soupape, le premier raccord (10) de sortie de l'unité (8) de soupape étant relié directement à un raccord d'entrée du dispositif (44b) électromagnétique de soupape.

5. Dispositif électropneumatique de fin de stationnement suivant l'une des revendications précédentes, **caractérisé en ce que** le dispositif (44b) électromagnétique de soupape est bloqué ou bridé sur le module (28) de commande de la remorque ou de la soupape de commande de la remorque, un raccord de sortie du dispositif (44b) électromagnétique de soupape étant relié directement au raccord (26) pneumatique de commande du module (28) de commande de la remorque ou de la soupape de commande de la remorque.

6. Dispositif électropneumatique de fin de stationnement suivant l'une des revendications précédentes, **caractérisé en ce que** l'unité (8) de soupape, le dispositif (44b) électromagnétique de soupape et le module (28) de commande de la remorque ou de la soupape de commande de la remorque ont des boîtiers ou blocs de soupape distincts.

7. Dispositif électropneumatique de fin de stationnement suivant l'une des revendications précédentes, **caractérisé en ce qu'**au dispositif (44b) électromagnétique de soupape est intégré au moins un capteur de pression, qui produit un signal correspondant à la pression sur le raccord (26) pneumatique de commande du module (28) de commande de la remorque ou de la soupape de commande de la remorque et est incorporé dans le un appareil (6) de commande ou dans l'autre appareil de commande pour réguler la pression au raccord (26) pneumatique de commande du module (28) de commande de la remorque.

8. Dispositif électropneumatique de fin de stationnement suivant l'une des revendications précédentes, **caractérisé en ce que** l'autre appareil de commande est constitué pour commander ou réguler exclusivement la fonction de frein de maintien en ligne.

9. Dispositif électropneumatique de fin de stationnement suivant l'une des revendications précédentes, **caractérisé en ce que** le producteur (2) de signal de frein de stationnement, l'appareil (6) de commande et l'unité (8) de soupape sont constitués de manière à pouvoir exécuter, outre la fonction de marche et la fonction de fin de stationnement, encore au moins l'une des fonctions suivantes :
a) une fonction de frein auxiliaire, dans laquelle un frein de stationnement du véhicule tracteur et le frein de la remorque sont serrés ou desserrés par palier,
b) une fonction de test, dans laquelle le frein de stationnement du véhicule tracteur est serré et le frein de la remorque est desserré.

10. Dispositif électropneumatique de fin de stationnement suivant la revendication 9, **caractérisé en ce que** le producteur (2) de signal de frein de stationnement est constitué de manière à produire les signaux de frein de maintien en ligne correspondant à la fonction de frein de maintien en ligne ou **en ce qu'**un autre producteur (4) de signal de frein de maintien en ligne, distinct et indépendant du producteur (2) de signal de frein de stationnement, est prévu pour produire les signaux de frein de maintien en ligne correspondant à la fonction de frein de maintien en ligne.

11. Dispositif électropneumatique de fin de stationnement suivant la revendication 10, **caractérisé en ce que** le producteur (4) de signal de frein de maintien en ligne est un producteur de signal de frein de maintien en ligne pouvant être actionné manuellement ou est formé d'un appareil électronique de commande.

12. Véhicule tracteur, comportant un dispositif électropneumatique de frein de stationnement suivant l'une des revendications précédentes.
